# EUROPEAN PATENT APPLICATION

(11) **EP 4 686 046 A1**
(43) Date of publication of application: **28.01.2026**
(21) Application number: 25190752.3
(22) Date of filing: 21.07.2025
(51) Int. Cl.: H02K 1/2798, H02K 21/24

(54) **AXIAL FLUX ELECTRIC MOTOR FOR DRIVING AN AUTOMOTIVE VEHICLE**

(30) Priority: 24.07.2024 IT 202400017233
(71) Applicant: Texa S.p.A., 31050 Monastier di Treviso (TV) (IT)
(72) Inventor: VIANELLO, Bruno, 31050 Monastier di Treviso (TV) (IT)
(74) Representative: Studio Torta S.p.A.

(57) **Abstract**

An axial flux electric motor (1) for driving an automotive vehicle comprising two lateral rotors that are both coaxial to a longitudinal axis and a central stator that extends along a longitudinal axis and is interposed between the two lateral rotors. The rotors comprise a discoidal rotor body with a circular shape that is arranged coaxial to the longitudinal axis in a position adjacent to the stator and is provided with a toroidal ribbon-shaped body that has a laminar shape and comprises a wound tape. The rotors further comprise permanent magnets that are permanently trapped/encased within rotor cavities extending radially in the toroidal ribbon-shaped body so as to form respective pockets having respective openings formed along the outer perimeter edge of the toroidal ribbon-shaped body.

## Description

### CROSS-REFERENCE TO RELATED APPLICATIONS

This patent application claims priority from Italian patent application no. 102024000017233 filed on July 24, 2024, the entire disclosure of which is incorporated herein by reference.

### TECHNICAL FIELD

This invention relates to an axial flux electric motor for driving an automotive vehicle.

In particular, this invention relates to an axial flux permanent magnet electric motor for sports cars/automobiles, preferably electric "supercars". The motor is equipped with a central stator arranged between two side rotors, to which the following discussion will make explicit reference without any loss of generality thereby.

### PRIOR ART

As is well known, electric automobiles comprise an electric power supply unit generally consisting of an electric battery pack that provides a direct voltage/current output, an inverter unit that receives the direct voltage/current input and provides an alternating voltage/current output, and an electric powertrain, which in turn is equipped with an axial flux electric motor that is electrically connected to the inverter unit to receive the alternating voltage/current and has a drive shaft mechanically connected to the wheels of the automobile.

Some axial flux electric motors for driving automobiles comprise a stator assembly with a central axis, the motor shaft extending along the central axis through the stator assembly, and two discoidal rotors that are arranged on axially opposite sides of the stator assembly along the central axis and are designed, in use, to rotate around the central axis relative to the stator assembly to rotate the drive shaft.

The discoidal rotors are generally planar, are arranged facing the opposite side walls of the stator assembly, and are centrally coupled to the drive shaft so as to rotate it. Specifically, the discoidal rotors comprise ferromagnetic plates with a flat inner wall facing a corresponding side wall of the stator assembly, and multiple plate-like magnets stably arranged on the inner wall in angularly equidistant positions along a circumferential line coaxial to the central axis.

Generally, the plate-like magnets are fixed to the inner wall of the discoidal rotors by means of gluing, which involves applying an epoxy glue layer to one of the two walls of the plate-like magnet, arranging the wall of the magnet with the layer on the flat inner wall of the plates of the discoidal rotors and subjecting the discoidal rotor with the applied magnets to a heating process (for example, in an furnace) at a predetermined bonding temperature to polymerise the glue layers and thus permanently attach the magnets to the discoidal rotor.

Tests carried out by the Applicant have shown that one of the critical aspects of the electric motors described above is the fact that as the speed, temperature and vibrations of the motor increase, the probability of the magnets' becoming detached from the discoidal rotor plate increases. In particular, the glue layer generally tends to degrade reducing its bonding capacity when subjected to particularly high temperatures, vibrations and rotational speeds.

The above tests also showed that the magnets are subject to thermal expansion. Therefore, when the motor operates at high speed and there is a significant increase in temperature, the volume of the magnets tends to increase, reducing the axial distance between the side wall of the stator and the magnets mounted on the rotor, and exposes the motor to a number of both critical structural and magnetic issues.

Various solutions have been devised for this purpose; however, to date they have not been completely satisfactory.

### DESCRIPTION OF THE INVENTION

The aim of this invention is, therefore, to provide an axial flux electric motor for driving an automotive vehicle, which overcomes the critical issues described above.

In accordance with this purpose, according to this invention, an axial flux electric motor for driving an automotive vehicle is provided, as defined in the related independent claim and, preferably but not necessarily, in any one of the claims dependent thereon.

The claims describe preferred embodiments of the present invention and form an integral part of the present specification.

### BRIEF DESCRIPTION OF THE DRAWINGS

This invention will now be described with reference to the accompanying drawings, which illustrate a non-limiting embodiment thereof, wherein:
Figure 1 is a schematic side elevation view of an electric automobile equipped with an automotive electric motor produced according to the precepts of this invention;
Figures 2 and 3 are two perspective views of the above-mentioned automotive electric motor from different vantage points,
Figure 4 is an exploded view of the automotive electric motor that this invention concerns,
Figure 5 is an enlarged scale view of a portion of the automotive electric motor rotor shown in Figure 4,
Figure 6 is a side perspective view, with parts removed for clarity, of a discoidal rotor body included in the automotive electric motor rotor produced according to the precepts of this invention,
Figure 7 is an enlarged scale side view of a portion of the automotive electric motor discoidal rotor body shown in Figure 6,
Figure 8 is an exploded view of the automotive electric motor rotor produced according to the precepts of this invention,
Figures 9 and 10 are two enlarged scale perspective views of two portions of the automotive electric motor rotor shown in Figure 8,
Figure 11 shows a perspective view with parts removed for clarity of the automotive electric motor rotor produced according to the precepts of this invention,
Figure 12 shows an enlarged scale perspective view of a detail of the automotive electric motor rotor shown in Figure 11,
Figure 13 shows a view from above of the automotive electric motor rotor produced according to the precepts of this invention,
Figure 14 is an enlarged scale view of a detail of the rotor shown in Figure 13,
Figure 15 is a partially exploded perspective view of the automotive electric motor rotor produced according to a variant of this invention,
Figure 16 is an enlarged scale view of a portion of the rotor shown in Figure 15,
Figure 17 shows a view from above of the automotive electric motor rotor shown in Figure 15,
Figure 18 is an enlarged scale view of a detail of the rotor shown in Figure 17,
Figure 19 shows a perspective view with parts removed for clarity of the automotive electric motor rotor shown in Figure 15,
Figure 20 shows an enlarged scale perspective view of a detail of the automotive electric motor rotor shown in Figure 19.

### PREFERRED EMBODIMENTS OF THE INVENTION

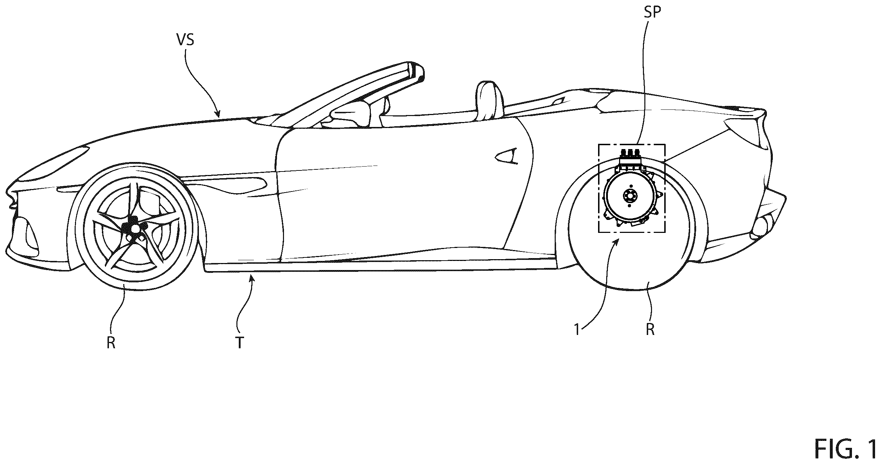

With reference to Figure 1, reference number 1 denotes, as a whole, an automotive axial flux permanent magnet electric motor (AFPM) or disc motor. In the following discussion, the axial flux permanent magnet electric motor (AFPM) will be referred to as the electric motor 1. In the schematic example shown in Figure 1, the electric motor 1 is installed in an electric road vehicle VS. The road vehicle VS is configured to transport people and conveniently belongs to the category of very high-performance road cars (high power, high torque and high speed), that is, an automobile belonging to the "supercar" category.

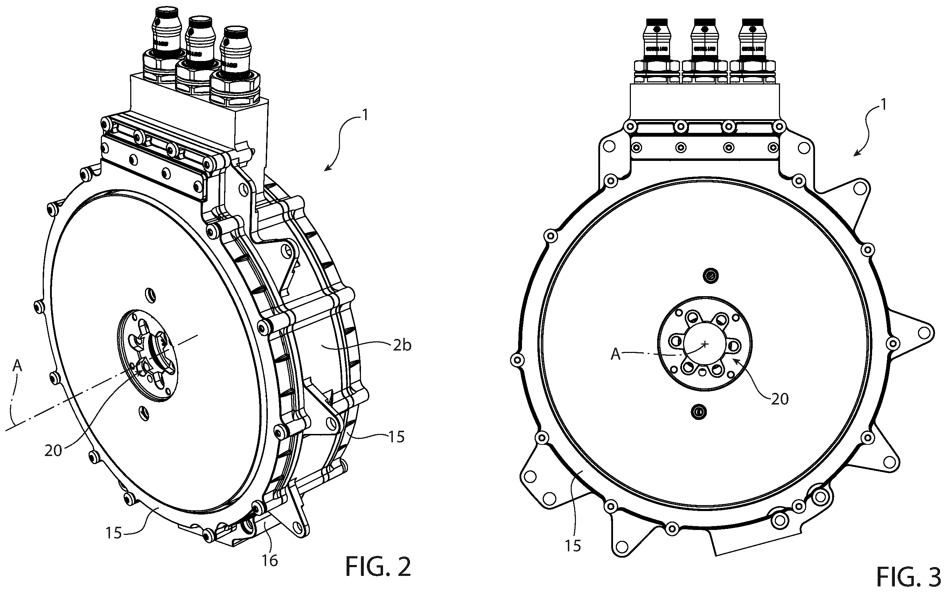

In the example illustrated, the road vehicle VS comprises a load-bearing chassis T (body), ground-resting wheels R, and an electric powertrain SP supported by the chassis T. The electric powertrain SP comprises the above-mentioned axial flux electric motor 1 (Figures 2-4), and is configured to rotate, by means of the axial flux electric motor 1, one or more wheels R of the road vehicle VS.

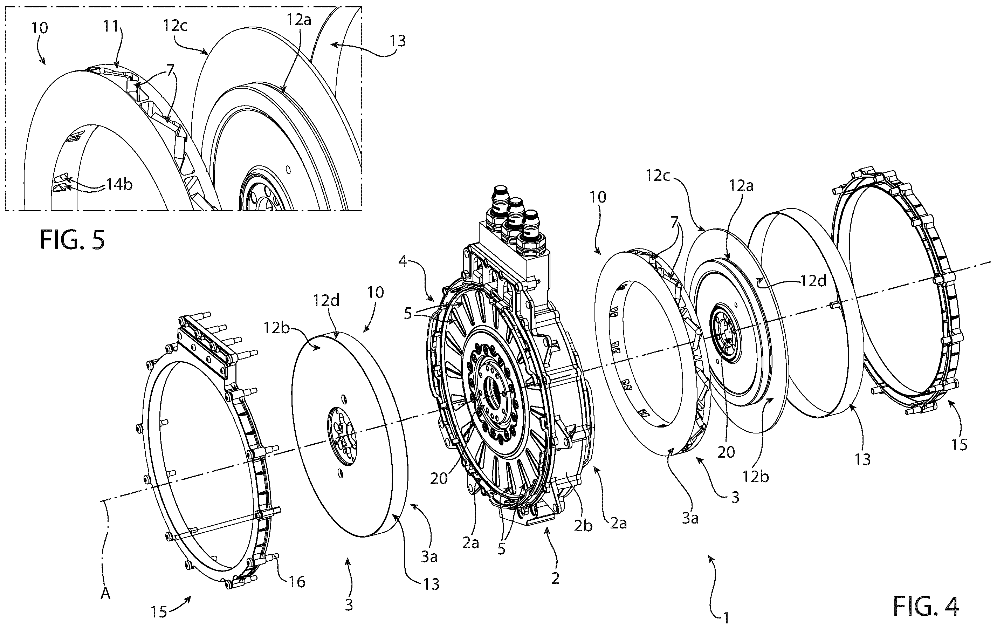

With reference to Figure 4, the electric motor 1 comprises a drive shaft 20, which extends along a longitudinal axis A and is designed to rotate around it. The electric motor 1 comprises two lateral rotors 3 that are both coaxial to the longitudinal axis A and are spaced apart from each other. The two lateral rotors 3 are connected to the drive shaft 20 in such a way as to rotate it around the longitudinal axis A.

The electric motor 1 also comprises a central stator 2 that extends along the longitudinal axis A and is interposed between the two lateral rotors 3.

The stator 2 comprises an annular outer casing 2b, and a core or central support body 4, which has an approximately toroidal shape with a rectangular cross section and a reduced axial thickness along the longitudinal axis A.

The central support body 4 is permanently fitted into the outer casing 2b and comprises multiple stator cavities containing respective stator elements 5. The stator cavities are angularly spaced apart around the longitudinal axis A and comprise through openings extending into the central support body 4 parallel to the axis A between the two opposite flat faces 2a of the stator 2. Each stator cavity has the two longitudinally opposite openings facing the two respective rotors 3.

According to one embodiment, the stator element 5 may comprise an inner core made of ferromagnetic material preferably, but not necessarily, formed from laminae, and an outer electrical coil of electrically conductive material (copper or the like), which is wound around the core within the corresponding stator cavity.

According to this invention, the rotor 3 comprises a rotor core or discoidal rotor body 10 that is flat, with a circular cross section and is arranged coaxial to the longitudinal axis A in a position adjacent and parallel to a face 2a of the stator 2, and permanent magnets 7 that are permanently trapped/embedded within the discoidal rotor body 10.

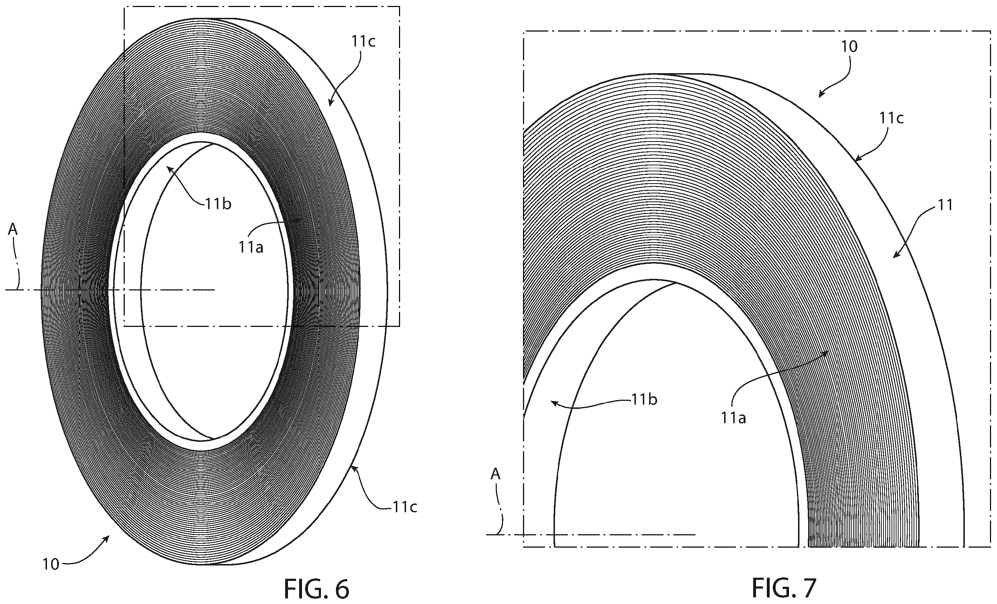

Conveniently, as shown in Figures 6 and 7, the discoidal rotor body 10 has a laminar structure wound around the longitudinal axis A. According to a preferred embodiment, the discoidal rotor body 10 comprises a tape 11, which is wound around the longitudinal axis A to form a spiral geometry. The tape 11 is made of ferromagnetic material, for example silicon steel or the like.

The technical effect of the wound laminar structure of the discoidal rotor body 10 is to attenuate hysteresis losses and/or parasitic currents induced in the rotor 3 during operation of the electric motor 1.

The tape 11 may preferably, but not necessarily, be externally coated with a thin layer of electrically insulating material.

According to an embodiment shown in Figures 6 and 7, the tape 11 is wound so as to form a compact toroidal ribbon-shaped body 11a (single body) that has a circular cross section on a plane orthogonal to the longitudinal axis A. Conveniently, the tape 11 when wound, may be embedded in an adhesive material or an epoxy resin with hardening components so as to form a single body. The two opposite ends of the tape 11 can also be firmly attached by means of respective welds on the respective coils of the wound tape 11 underneath.

The toroidal ribbon-shaped body 11a has an inner perimeter edge 11b (having a first radius) and an outer perimeter edge 11c (having a second radius greater than the first radius). In the example illustrated, the inner perimeter edge 11b of the toroidal ribbon-shaped body 11a is permanently (rigidly) fitted to the outer perimeter edge 12a of a central annular plate-like element 12 arranged approximately coplanar to the toroidal ribbon-shaped body 11a so as to form a single body with it.

In the example illustrated, the central annular plate-like element 12 is a flat circular portion of a support plate 12b that is arranged to rest on one side of the toroidal ribbon-shaped body 11a. As shown in Figure 4, the support plate 12 conveniently comprises a flat circular disc that has a radius approximately equal to that of the toroidal ribbon-shaped body 11a. Conveniently, the central annular plate-like element 12 and the support plate 12b form a single body (monobloc).

Conveniently, the toroidal ribbon-shaped body 11a is permanently attached to the support plate 12b so as to form a monobloc. Conveniently, one side face of the toroidal ribbon-shaped body 11a is permanently attached to the side face 12d of the support plate 12b. The toroidal ribbon-shaped body 11a can be attached to the support plate 12b by means of gluing or welding.

Referring to Figure 4, the discoidal rotor body 10 is arranged laterally to the stator 2 so that it has an inner face 3a slightly spaced from a face 2a of the stator 2. The space between the face 2a of the stator 2 and the inner face 3a of the rotor 3 defines the lateral air gap between stator 2 and rotor 3.

With reference to Figures 4, 5, 8, 10, 11 and 12, according to this invention, rotor cavities 8 are formed on the toroidal ribbon-shaped body 11a, which are structured so as to house the permanent magnets 7 inside. The permanent magnets 7 are plate-like, flat, and are permanently embedded within the rotor cavities 8. Conveniently, the permanent magnets 7 are permanently attached inside the rotor cavities 8 by means of a glue or resin, for example an epoxy resin.

The rotor cavities 8 extend within the toroidal ribbon-shaped body 11a along a radial direction and are arranged in angularly spaced apart positions along a circumferential direction about the longitudinal axis A, based on a predetermined polar pitch.

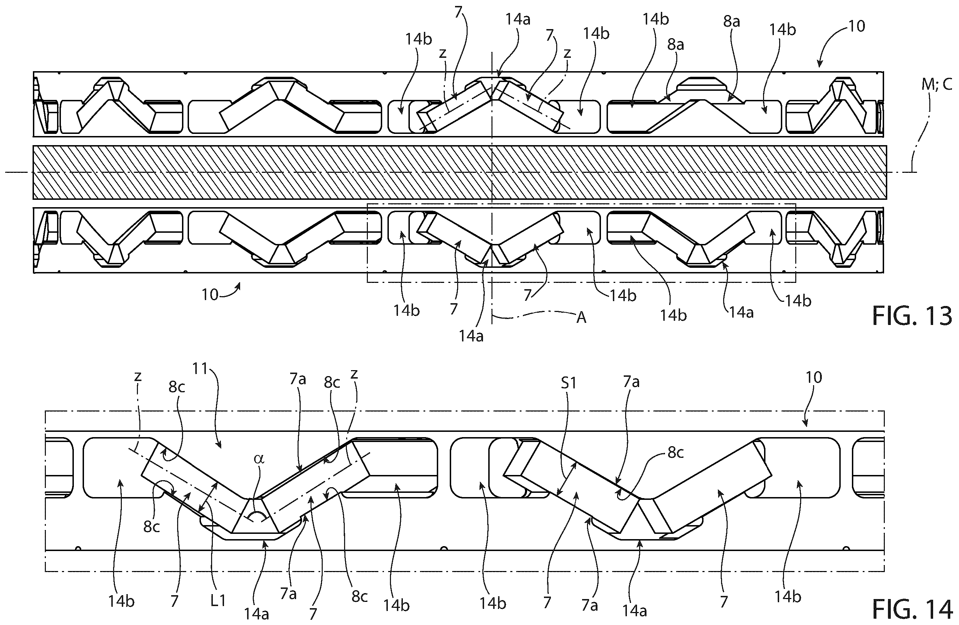

According to a preferred embodiment shown in Figures 6-14, the permanent magnets 7 have an approximately plate-like outer shape and an approximately rectangular cross section in the radial direction. The rotor cavities 8 have an inner shape equivalent to the outer shape of the permanent magnets 7 so as to house them. As shown in Figure 14, the rotor cavity 8 has a cross section in the radial direction that is essentially rectangular and has a width L1 that has a slightly greater thickness S1 than the magnet 7. The magnet 7 has the two opposite larger faces 7a (along the radial direction) approximately resting against the two opposite inner walls 8c of the rotor cavity 8 (along the radial direction). The magnet 7 is, thus, conveniently trapped axially between the two opposite inner walls 8c of the rotor cavity 8. In addition, the two opposite larger faces 7a of the magnet 7 are firmly attached to the two respective opposite inner walls 8c of the rotor cavity 8 by gluing with adhesive material and/or resin and/or the like. A technical effect achieved by positioning the magnet in the stator cavity is to "mechanically" trap the magnet in the cavity. On the one hand, the axial position of the magnet in the rotor 3 is simply and cost-effectively maintained and, on the other hand, all of the critical structural and magnetic issues described above with regard to known electric motors, resulting from temperature increases, are eliminated.

In addition, in contrast to known solutions, in the electric motor produced according to this invention, a thermal expansion of the magnet results in an increase in how embedded it is in the corresponding cavity.

In addition, the magnet's attachment surface on the walls is considerably increased. In fact, unlike the known solutions in which the magnet is glued to the rotor via a single face, in the embodiment according to this invention, the gluing of the magnet to the rotor is carried out on two larger faces 7a. Increasing the attachment surface of the magnet on the rotor increases the radial anchoring of the magnet 7 on rotor 3 and thus allows the magnet to be subjected to greater centrifugal forces compared to the known solutions. This condition is particularly relevant in the electric powertrains SP of supercars where particularly high rotor rotation speed performance is required.

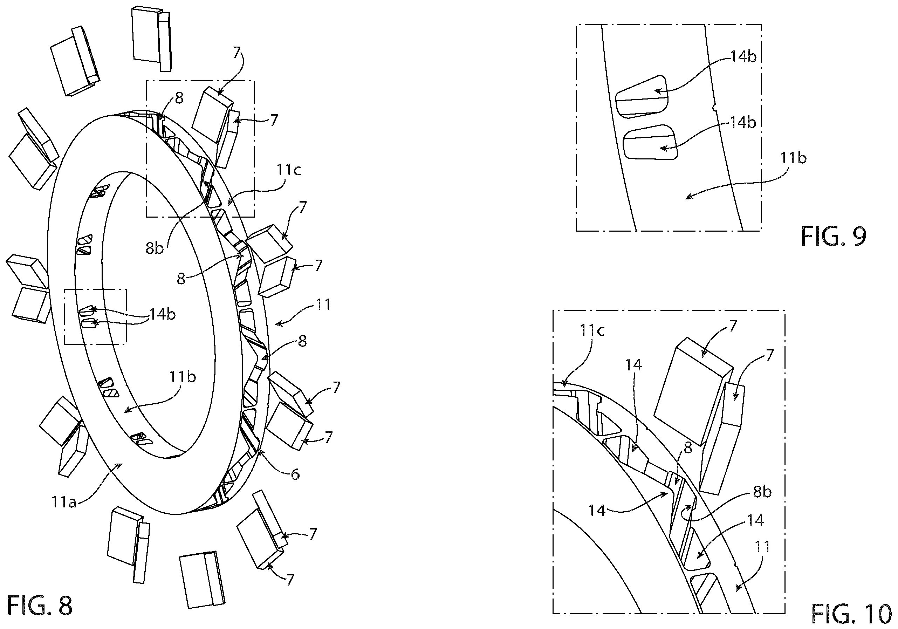

According to a preferred embodiment shown in Figures 8-14, each rotor cavity 8 is formed radially on the discoidal rotor body 10 so that it lies on a lying plane Z (Figure 14) transverse to the lying plane Z of an adjacent rotor cavity 8 along the circumferential direction C**.**

The rotor cavities 8 are formed radially on the discoidal rotor body 10 so as to have sections in pairs, transverse to the radial direction, that have an essentially V-shaped geometry.

Each magnet 7 is permanently trapped in the corresponding rotor cavity 8 so as to be arranged on a lying plane that has a predetermined angle of inclination α relative to the lying plane of an adjacent magnet 7 along the circumferential direction C (Figure 14). For example, the angle of inclination α ranges between about 10° and about 35°.

The magnets 7 are arranged spaced apart in the rotor cavities 8 in such a way that they have a section in pairs, transverse to the radial extension direction, which has an essentially V-shaped geometry.

According to one possible embodiment, the magnets 7 are housed in the corresponding rotor cavities 8 so that the longitudinal end of a magnet 7 (along the axis Z) is close to the longitudinal end of an adjacent magnet 7.

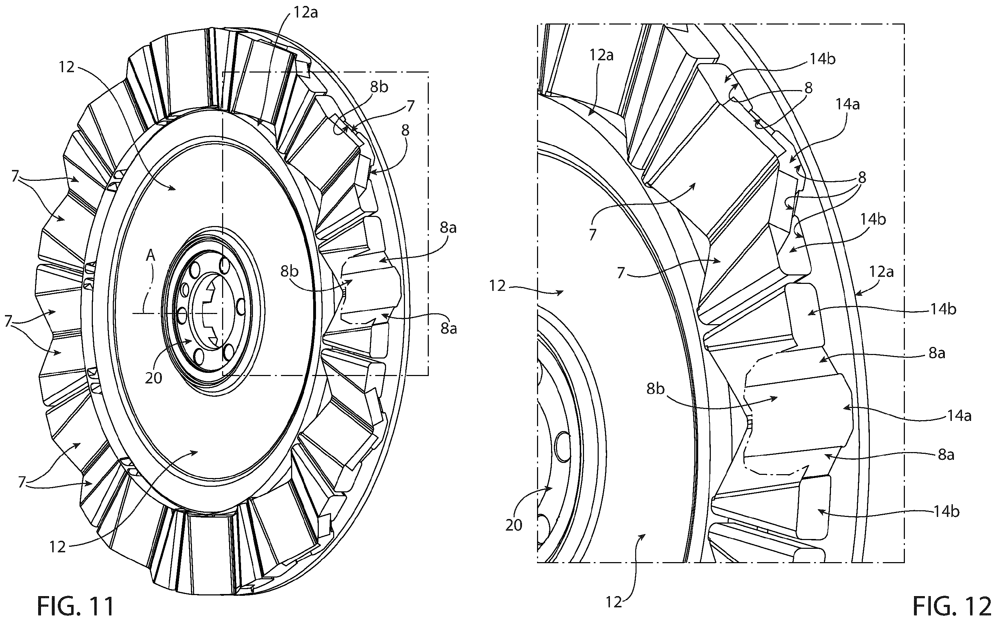

According to a preferred embodiment shown in Figures 11 and 12, the rotor cavities 8 extend radially into the discoidal rotor body 10 so as to define blind openings or rotor pockets 8a with a single opening 8b formed on the outer perimeter edge 11c of the toroidal body 11a. The pockets 8a have an inner shape equivalent to the outer shape of the magnets 7 so that they can be housed inside. The magnets 7 are also sized so that their height measured along the radial direction of the toroidal body 11a that is slightly shorter than the pocket 8a along the same radial direction. Conveniently, as shown in Figures 9 and 10, the outer side of the magnet 7 facing into the opening 8b has a surface essentially coplanar with the surface of the outer perimeter edge 11c.

In accordance with a preferred embodiment shown in Figure 4, the rotor 3 also comprises an annular body 13 that is rigidly fitted to the outer perimeter edge 11c of the toroidal ribbon-shaped body 11a in such a way as to close the openings 8b of the pockets 8a so as to permanently trap the magnets 7 inside the discoidal rotor body 10. The annular body 13 is preferably, permanently coupled with and attached to the toroidal ribbon-shaped body 11a. Conveniently, the annular body 13 can be rigidly attached to the outer circular perimeter of the toroidal ribbon-shaped body 11a by means of glue and/or a resin, for example an epoxy resin. Conveniently, the annular body 13 can also be rigidly attached to the support plate 12b. Conveniently, the support plate 12b can be made of ferromagnetic material. Conveniently, the annular body 13 can be made of ferromagnetic material. Conveniently, the annular body 13 and the support plate 12b can be rigidly attached to each other by means of one or more welds to form a single body.

It is understood that, alternatively, the annular body 13 can also be made of polymer conveniently filled with glass fibre. The annular body 13 and the support plate 12b can be rigidly attached to each other by means of gluing to form a monobloc. The annular body 13 has the technical effect, on the one hand, of ensuring the radial locking of the magnets 7 within the discoidal rotor body 10 even when the rotor 3 is rotating at extremely high speeds and, on the other hand, of further increasing the structural rigidity of the rotor 3.

With reference to Figure 4, the rotors 3 can be housed in respective circular seats formed in lateral annular casings 15, attached to the edge of the stator 2 casing 2b by means of fasteners 16 (screws or the like).

According to a preferred embodiment shown in Figures 8-12, the rotor 3 further comprises magnetic interruption spaces or slits 14 that extend radially within the toroidal ribbon-shaped body 11a at the ends of the magnets 7 and are configured to interrupt the flux of the magnetic field generated by the magnets 7 that tends to self-concatenate in the same magnet 7 and/or with an adjacent magnet 7. The interruption slits 14 preferably contain air and/or any type of non-magnetic material that has a magnetic permeability equal to or less than the magnetic permeability of air.

According to a preferred embodiment, the interruption slits 14 are made in such a way as to form enlargements of the rotor cavities 8 at their axial ends. In other words, the rotor cavities 8 are enlarged to contain the magnets 7, and have additional internal portions/spaces that constitute/form the interruption slits 14 of the magnetic flux.

According to a first embodiment shown in Figures 11 and 12, the rotor cavity 8 housing a magnet 7 is formed in the toroidal ribbon-shaped body 11a so as to be communicating with the rotor cavity 8 housing an adjacent magnet. The two ends placing the rotor cavities of each pair of rotor cavities 8 of the toroidal ribbon-shaped body 11a in direct communication are formed in the same so that one of the two rotor cavities 8 has a first end directly communicating with the first end of the other adjacent rotor cavity 8, along the circumferential direction C.

According to the embodiment shown in Figure 12, each pair of rotor cavities 8 is formed in the toroidal ribbon-shaped body 11a so to form a single continuous groove with a radial extension and is structured to contain two adjacent magnets 7 arranged on planes inclined to each other at a given angle α to form the above-mentioned V-shaped arrangement of magnets 7.

With reference to Figure 11 and 12, the rotor cavities 8 of the single groove are formed in the toroidal ribbon-shaped body 11a so that their first enlarged ends communicate with each other and form a central slit, denoted 14a, at the vertex of the V-shaped arrangement of the two adjacent magnets 7. The central slit 14a in the groove 8 extending into the vertex between the two adjacent magnets 7 has the effect of interrupting the self-concatenation of the magnetic flux lines of the magnet 7 and/or the adjacent magnet 7.

With reference to Figures 11 and 12, the rotor cavities 8 of the single groove are made in the toroidal ribbon-shaped body 11a to have lateral slits 14b, denoted 14b, at the second enlarged ends opposite the first ends. The side interruption slit 14b is defined by a widening of the second end of the groove 8 and has the effect of interrupting the self-concatenation of the magnetic flux lines of the magnet 7 arranged in the rotor cavity 8 with the magnet 7 arranged in a different adjacent rotor cavity 8.

In the example illustrated in Figures 8 and 9, the interruption slits 14b extend radially through the toroidal ribbon-shaped body 11a.

With reference to Figures 13 and 14, the V-shaped rotor cavities 8 are made in the corresponding discoidal rotor bodies 10 in such a way that the V-shaped sections diverge towards the stator 2 and converge on the opposite side with respect to the stator.

With reference to Figures 13 and 14, the V-shaped rotor cavities 8 are formed on the two discoidal rotor bodies 10 symmetrically with respect to a middle central plane M orthogonal to the longitudinal axis A**.**

With reference to Figures 13 and 14, the interruption slit 14b of a rotor cavity 8 is arranged in such a way that it is separated by a thin flap 25 of the tape 11 from the adjacent interruption slit 14b of a different one of a rotor cavity 8**.** The flap 25 defines a magnetic bridge and extends approximately transverse to the circumferential direction C of the discoidal rotor body 10.

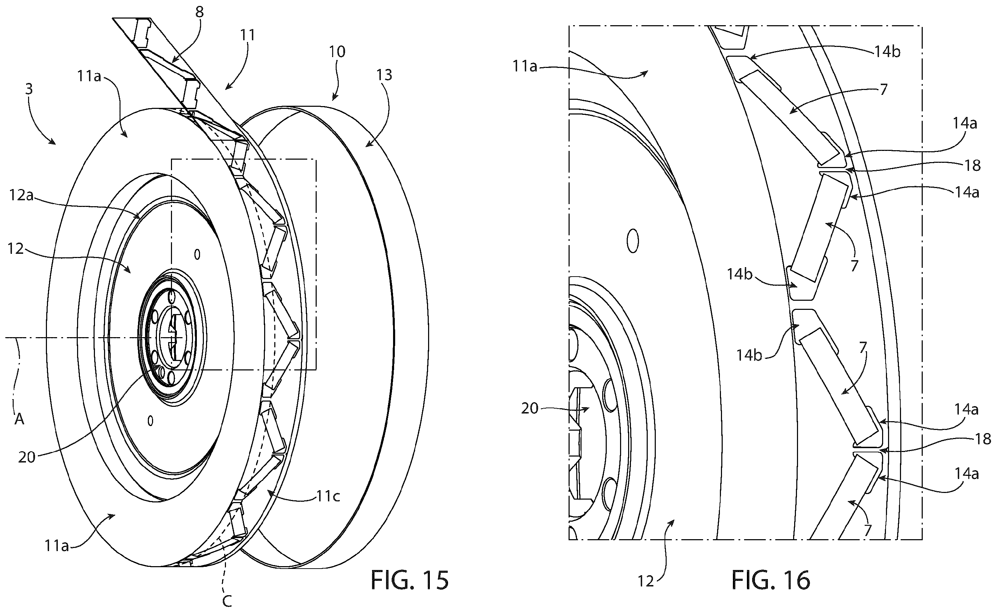

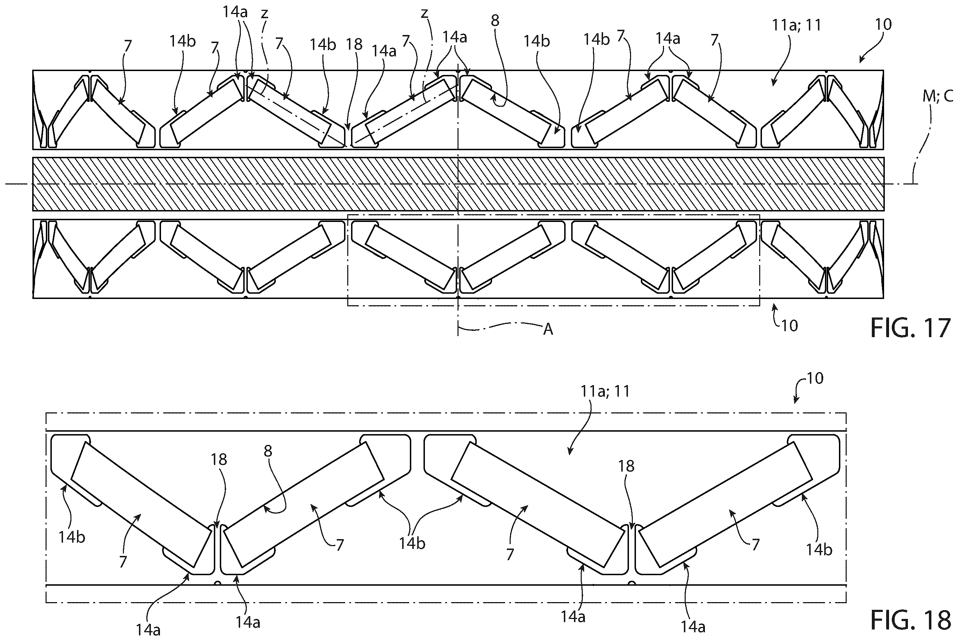

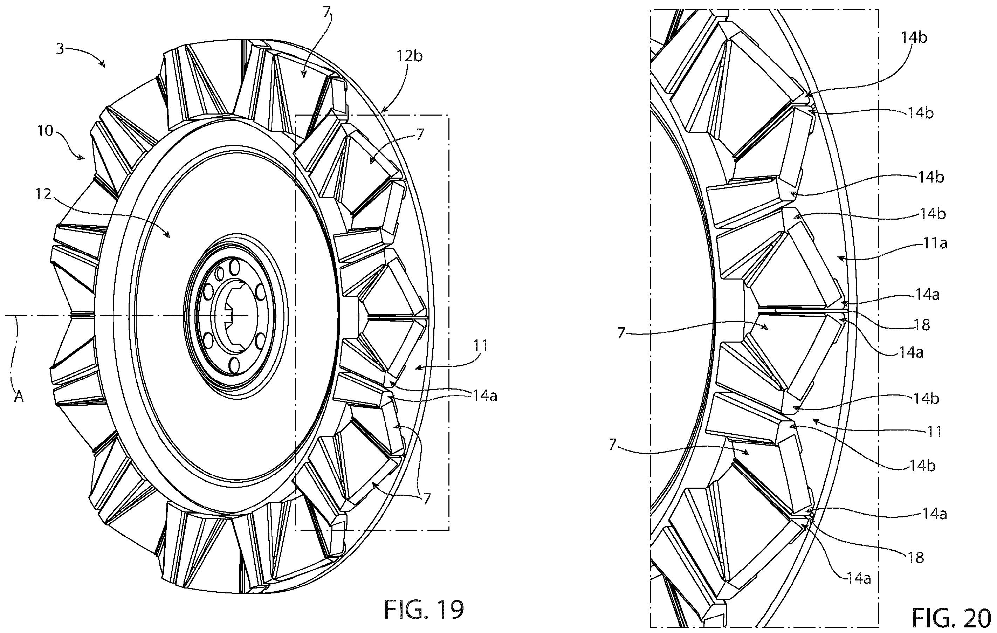

According to an embodiment shown in Figures 15-20, each rotor cavity 8 is made by means of a distinct groove separate from the groove of an adjacent rotor cavity 8. The rotor cavity 8 of each pair of rotor cavities 8 is formed in the toroidal ribbon-shaped body 11a and has the interruption slit 14a separated and distinct from the interruption slit 14 a of the adjacent rotor cavity 8. The interruption slit 14a of a rotor cavity 8 is separated from the interruption slit 14a of the adjacent rotor cavity 8 by an intermediate flap 18 of the tape 11.

The embodiment shown in Figures 15-20 also differs from the embodiment shown in Figures 1-14 in that the magnets 7 and their rotor cavities 8 are approximately trapezoidal in shape.

Placing the magnets in the pockets formed in the discoidal rotor bodies and retaining them by means of their corresponding annular bodies makes it possible to prevent the magnets from detaching even at high speeds, a condition especially required in supercars.

## Claims

1. An axial flux electric motor (1) for driving an automotive vehicle comprising:
two lateral rotors (3) which are both coaxial to a longitudinal axis (A) and are reciprocally spaced apart from each other, said two lateral rotors (3) being configured to be connected to a drive shaft (20) to rotate it around the longitudinal axis (A),
a central stator (2) which extends along the longitudinal axis (A) and is interposed between said two lateral rotors (3),
said rotors (3) comprising a discoidal rotor body (10) of circular shape which is arranged coaxial to the longitudinal axis (A) in a position adjacent to the stator (2) and is provided with a toroidal ribbon-shaped body (11a),
the toroidal ribbon-shaped body (11a) has a laminar shape and comprises a tape (11) which is wound around said longitudinal axis (A) in order to form a compact monobloc,
said two rotors (3) further comprise planar flat permanent magnets (7) which are permanently trapped/encased within rotor cavities (8) extending radially in said toroidal ribbon-shaped body (11a) so as to form respective pockets (8a) having respective openings (8b) formed along the outer perimeter edge of said toroidal ribbon-shaped body (11a),
and an annular body (13) which is rigidly fitted to the outer perimeter edge (11c) of the toroidal ribbon-shaped body (11a) in order to close the openings (8b) of the pockets (8a) so as to radially trap the magnets (7) rigidly within the pockets (8a) themselves.

2. An electric motor according to claim 1, in which said rotor cavities (8) are obtained on the toroidal ribbon-shaped body (11a) in such a way as to present, in pairs, sections transverse to the radial direction having a substantially V shaped geometry.

3. An electric motor according to claim 2, wherein said magnet (7) is permanently trapped in said rotor cavity (8) to be placed on a lying plane having an angle of inclination (α) with respect to the lying plane of another magnet (7) arranged in an adjacent rotor cavity (8).

4. An electric motor according to claim 2, wherein said pair of rotor cavities (8) is formed in the toroidal ribbon-shaped body (11a) to form a single continuous groove which is structured to contain two adjacent magnets (7) arranged on planes inclined to each other at a given angle (a) to form a V-shaped arrangement.

5. An electric motor according to any one of the preceding claims, wherein
said permanent magnets (7) have two opposite surfaces (7a) permanently fixed on the two opposite inner walls (8c) of the respective rotor cavities (8).

6. An electric motor according to any one of the preceding claims, wherein the rotor (3) further comprises magnetic interruption slits (14) extending radially within the toroidal ribbon-shaped body (11a) at the ends of said rotor cavities (8) and are configured to interrupt the magnetic self-concatenation of the magnets (7) placed in the rotor cavities (8) themselves.

7. An electric motor according to claim 6, wherein said interruption slits (14) preferably contain air and/or any type of non-magnetic material having a magnetic permeability equal to or less than the magnetic permeability of air.

8. An electric motor according to claim 7, wherein
one of the two rotor cavities (8) has a first end communicating with the first end of the other adjacent rotor cavity (8), along the circumferential direction to form a central slit (14a).

9. An electric motor according to claim 7 or 8 in which the rotor cavities (8) of a single groove are obtained in the toroidal ribbon-shaped body (11a) to have lateral slits (14b) at second enlarged ends opposite to said first ends.

10. An electric motor according to claim 9, wherein said slits (14b) are separated by flaps (18) transverse to the circumferential direction of the discoidal rotor body (10).

11. Automotive electric powertrain (SP) of an automotive vehicle comprising an axial flux electric motor (1) made according to any one of the previous claims.

12. Automotive vehicle comprising an electric powertrain (SP) made according to claim 11.
